# FASCICULE DE BREVET EUROPEEN

(11) **EP 3 181 935 B1**
(45) Date de publication et mention de la délivrance du brevet: **12.02.2020**
(21) Numéro de dépôt: 16204476.2
(22) Date de dépôt: 15.12.2016
(51) Int. Cl.: F16D 55/224, F16D 55/2255

(54) **FREIN A DISQUE ELECTROMECANIQUE COMPORTANT UN ETRIER PORTANT DEUX PLAQUETTES BASCULANTES**
ELEKTROMECHANISCHE SCHEIBENBREMSE, DIE EINEN BÜGEL MIT ZWEI KIPPPLATTEN UMFASST
ELECTROMECHANICAL DISC BRAKE COMPRISING A CALLIPER CARRYING TWO TILTING PLATES

(30) Priorité: 16.12.2015 FR 1562490
(43) Date de publication de la demande: 21.06.2017
(73) Titulaire: Foundation Brakes France, 93700 Drancy (FR)
(72) Inventeur: ESNÉE, Didier, 72000 Le Mans (FR)
(74) Mandataire: Brevalex

(56) Documents cités:
- DE-U1-202015 002 450
- GB-A- 813 316
- US-A- 3 088 554
- US-A- 4 852 699

## Description

### DOMAINE TECHNIQUE

L'invention se rapporte à un frein à disque de véhicule automobile à étrier fixe, de type électromécanique, c'est-à-dire équipé d'un moteur électrique entraînant des actionneurs mécaniques.

### ÉTAT DE LA TECHNIQUE ANTÉRIEURE

Le document GB813316 A décrit un frein à disque de véhicule automobile à étrier fixe.

L'invention se rapporte à un frein à disque de véhicule automobile comportant un disque de freinage équipé d'un étrier chevauchant ce disque et portant une paire de plaquettes de friction chacune en regard d'une face du disque. Cet étrier comporte encore un moteur électrique avec des moyens d'actionnement pour presser ces plaquettes contre le disque de freinage ou les en relâcher selon que le frein est activé ou désactivé.

Le but de l'invention est de proposer une architecture générale d'étrier de frein à disque qui soit significativement plus simple que celle des étriers connus, de manière à en réduire le coût de fabrication et/ou améliorer le niveau de fiabilité et de robustesse appropriés.

### EXPOSÉ DE L'INVENTION

A cet effet, l'invention a pour objet un étrier de frein tel que défini dans les revendications indépendantes 1 et 2.

Avec cet agencement, l'étrier et son montage ont une structure générale simplifiée, puisqu'il n'est plus nécessaire que les plaquettes soient flottantes en translation dans l'étrier, comme c'est le cas avec les étriers connus. Cet agencement permet en outre de séparer les fonctions de frein de service des fonctions de frein de parc.

L'invention concerne également un étrier tel que défini dans les revendications dépendantes, et un frein à disque comportant un tel étrier.

### BRÈVE DESCRIPTION DES DESSINS

La figure 1 est une vue en coupe du frein selon l'invention conformément à un plan de coupe orthogonal ;
La figure 2 est une vue en perspective montrant les plaquettes et leur ensemble d'actionnement du frein selon l'invention représentés seuls ;
La figure 3 est une vue en perspective montrant dans son ensemble un étrier de frein selon l'invention ;
La figure 4 est une vue de face montrant dans son ensemble un étrier de frein selon l'invention ;
La figure 5 est une vue latérale montrant dans son ensemble un étrier de frein selon l'invention.

### EXPOSÉ DÉTAILLÉ DE MODES DE RÉALISATION PARTICULIERS

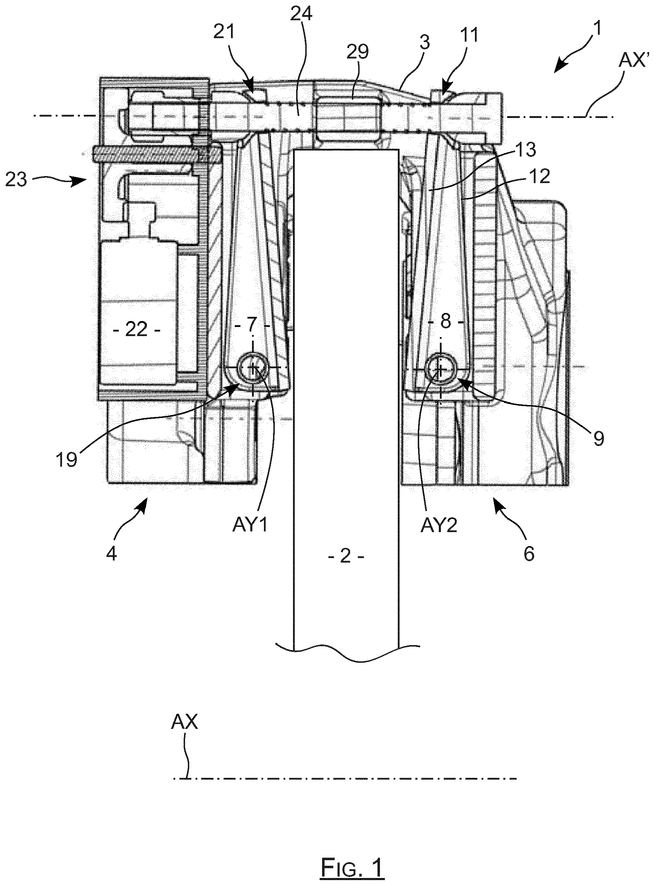

L'étrier de frein selon l'invention qui est repéré par 1 dans la figure 1 comporte une chape fixe 3 chevauchant un disque 2. Cette chape fixe 3 comporte une première portion latérale 4 par laquelle il est porté par un élément de châssis non représenté, et une seconde portion latérale 6, située en vis-à-vis de la première portion 4. La chape fixe chevauche le disque 2 de sorte que ce disque est interposé entre ses portions latérales 4 et 6.

Le disque 2 comporte typiquement une couronne plane délimitée par un bord externe et par un bord interne circulaires et concentriques avec un axe de révolution AX, cette couronne étant portée par un moyeu non visible sur les figures.

La première portion 4 porte une première plaquette de frein 7 et la seconde portion 6 porte une seconde plaquette 8, situées en vis-à-vis l'une de l'autre, ces plaquettes étant montées basculantes, pour être pressées contre le disque lorsque le frein est activé, et pour être relâchées lorsque le frein est désactivé.

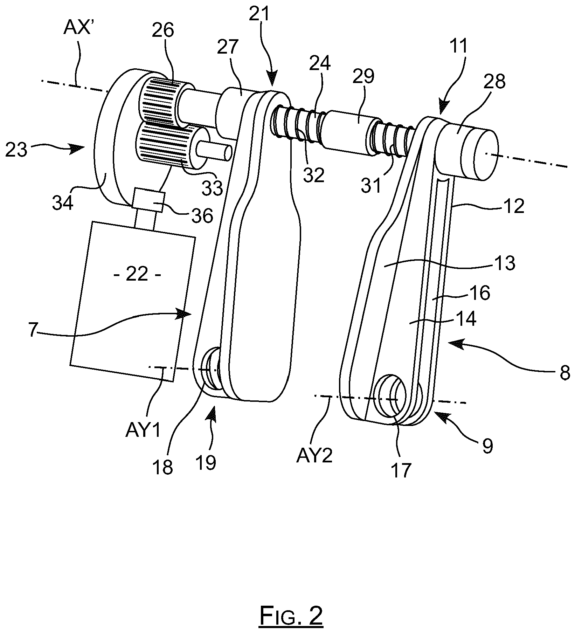

La première et la seconde plaquette 7 et 8 sont symétriques l'une de l'autre par rapport à un plan médian du disque 2, la structure générale de la seconde plaquette 8 apparaissant plus clairement sur la figure 2.

Comme visible sur cette figure 2, la seconde plaquette 8 qui longe le disque 2 comporte une base 9 relativement épaisse se prolongeant en une extrémité 11 significativement plus fine. La base 9 est située au voisinage du bord interne du disque, alors que l'extrémité 11 s'étend au-delà du bord extérieur de ce disque 2.

Cette plaquette 8 est portée par sa base 9 qui est montée basculante sur le reste de la chape fixe de façon à offrir à l'extrémité libre 11 une mobilité suffisante pour lui permettre d'être soit rapprochée et pressée contre le disque, soit légèrement écartée de ce disque 2.

Cette plaquette 8 comporte un support ou sabot 12 avantageusement métallique, comprenant une paroi principale 13 plane ayant une face en vis-à-vis du disque 2 et une face opposée qui porte une ou deux nervures 14, 16.

La face en vis-à-vis du disque 2 est couverte d'un matériau de friction pour générer le freinage lorsqu'elle est pressée contre le disque 2. La ou les nervures 14, 16 s'étendent parallèlement l'une à l'autre, depuis la base 9 jusqu'à l'extrémité 11, perpendiculairement à la paroi principale et en étant espacées l'une de l'autre.

Au niveau de la base 9 de la plaquette, la ou les nervures comprennent chacune un trou ou perçage 17 destinés à être traversés par un plot ou un axe mécanique porté par la première portion 4 de la chape fixe et orientés selon un axe AY2 d'orientation orthoradiale par rapport à l'axe AX du disque.

La plaquette 8 est ainsi montée basculante autour de l'axe AY2, ce qui permet de rapprocher ou d'écarter son extrémité libre 11 du disque 2, selon que le frein est activé ou désactivé.

La première plaquette 7 a une forme et une conception qui sont symétriques de celles de la plaquette 8, par rapport à un plan médian du disque 2. Elle comporte elle aussi une extrémité libre 21 dépassant du bord externe du disque et une base 19 en vis-à-vis de la base 9, dont les nervures comportent un perçage 18, et par laquelle elle est montée basculante dans la portion 4 de la chape fixe 3 pour pivoter autour d'un axe AY1 parallèle à l'axe AY2.

Complémentairement, la chape fixe porte encore un ensemble d'actionnement électromécanique. Cet ensemble comprend un moteur 22 couplé à un réducteur 23 pour entraîner un axe mécanique principal 24 agencé pour presser ces plaquettes 7, 8 par leurs extrémités libres 21, 11 contre le disque 2, ou pour les en relâcher sensiblement, selon que le frein est activé ou désactivé.

Comme visible sur les figures 1 et 2, l'axe mécanique principal 24 que le moteur 22 entraîne par l'intermédiaire du réducteur 23 est situé au-delà du bord extérieur du disque 2, et il s'étend selon une direction AX' normale au plan du disque 2. Cet axe mécanique principal 24 qui est mobile en translation le long de son axe longitudinal AX' traverse la paroi principale de chaque plaquette 7, 8 au niveau des extrémités 21, 11 de ces plaquettes dépassant du bord externe du disque.

Cet axe mécanique 24 traverse également un support central 29, rigidement solidaire du corps d'étrier fixe, situé à mi-distance entre les extrémités de plaquettes 11 et 21, et qui constitue un palier portant cet axe 24. Ce support central 29 constitue un palier portant l'axe mécanique 24. Complémentairement, un premier et un second ressort de rappel 31 et 32, tous deux hélicoïdaux et portés par l'axe mécanique 24, sont interposés entre le support central 29 et la première plaquette 7, et entre ce support central 29 et la seconde plaquette 8.

L'axe mécanique 24 porte un pignon d'extrémité 26 ainsi qu'une première et une seconde butée de serrage 27, 28 accolées respectivement contre les faces externes des deux plaquettes 7, 8. La première plaquette 7 a ainsi son extrémité 11 qui est enserrée entre la butée 27 et le ressort de rappel 31 qui sont tous deux portés par l'axe mécanique 24. La seconde plaquette 8 a son extrémité 21 enserrée entre la butée 28 et le ressort de rappel 32 qui sont également portés par l'axe mécanique 24. Le support central 29 constitue ainsi à la fois un palier portant l'axe 24 et une butée centrale.

Dans un premier mode de réalisation de l'étrier de frein selon l'invention, le pignon d'extrémité 26 est rigidement solidaire de l'axe mécanique 24 qui le porte, et cet axe 24 est libre de tourner autour de son axe longitudinal AX', en plus d'être mobile en translation le long de cet axe. La première butée 27 est vissée sur un filetage correspondant de cet axe mécanique 24 et elle est bloquée en rotation par un pion ou analogue dépassant de la plaquette 7, de sorte que lorsque l'axe mécanique 24 tourne dans un premier sens de rotation, cette butée avance le long de l'axe mécanique vers le support 29 de l'axe 24.

De manière analogue, la seconde butée 28 est vissée sur un autre filetage correspondant de l'axe mécanique 24 et elle est bloquée en rotation par un pion ou autre dépassant de la plaquette 8. Mais le sens d'enroulement du filet de cette seconde butée 28 et du filetage correspondant de l'axe mécanique sont en sens inverses du sens du filet de la butée 27 et du filetage correspondant de l'axe mécanique 24.

Ainsi, lorsque l'axe mécanique 24 tourne dans le premier sens de rotation la première butée 27 se déplace vers le support central 29 alors que la seconde butée 28 se déplace aussi vers ce support central, ce qui rapproche les extrémités 11 et 21 l'une de l'autre pour presser les plaquettes contre le disque 2 afin de provoquer le freinage. Durant ce mouvement, la mobilité longitudinale de l'axe 24 permet d'équilibrer les efforts exercés par les deux butées contre les plaquettes.

A l'inverse, lorsque l'axe mécanique 24 tourne dans un second sens opposé au premier, les butées 27 et 28 s'écartent l'une de l'autre au lieu de se rapprocher, ce qui écarte les plaquettes pour arrêter le freinage.

Avantageusement, seule la première ou la seconde butée 27, 28 est vissée sur l'axe mécanique 24, l'autre butée étant rigidement solidaire de cet axe, ce qui permet de réduire encore le coût de fabrication de l'ensemble.

Dans un second mode de réalisation, le pignon 26 est vissé sur un filetage de l'axe 24 et la première butée 27 est libre de coulisser et de tourner selon cet axe 24, cet axe 24 est bloqué en rotation autour de son axe longitudinal tout en étant mobile en translation le long de cet axe longitudinal AX, et la seconde butée 28 est rigidement solidaire de l'axe 24.

L'axe longitudinal AX comporte deux méplats opposé pour lui conférer une section oblongue, et de façon complémentaire, les trous traversant les extrémités 11 et 21 des plaquettes ainsi que le support central 29 ont des sections oblongues correspondantes, ce qui permet de bloquer cet axe 24 en rotation tout en le laissant libre en translation.

Le pignon 26 et la première butée 27 avantageusement rigidement solidaires l'un de l'autre constituent un poussoir entraîné en rotation autour de l'axe 24 par l'intermédiaire du pignon 33 entraîné par le moteur, pour avancer ou reculer le long de cet axe lorsque le moteur 22 est activé.

Lorsque le pignon 26 est entrainé dans le premier sens de rotation, la première butée 27 avance le long de l'axe 24 en étant poussée par le pignon 26 pour se rapprocher du support central 29 et de la seconde butée 28, de manière à presser les plaquettes contre le disque afin de provoquer le freinage.

Dans le premier comme dans le second mode de réalisation, la mobilité en translation de l'axe mécanique 24 permet d'équilibrer les efforts exercés sur les deux plaquettes 7 et 8, afin notamment de compenser une usure asymétrique de ces plaquettes.

Si l'usure de la première plaquette 7 est plus importante que celle de la seconde plaquette 8, l'axe mécanique 24 se déplace naturellement vers la plaquette 8, c'est-à-dire vers la droite sur la figure 2, pour équilibrer les efforts auxquels il est soumis, et par là même assurer que les plaquettes soient pressées avec la même intensité.

Inversement, si l'usure de la seconde plaquette 8 est plus importante, l'axe mécanique se déplace spontanément vers la première plaquette, pour le même résultat, à savoir assurer que les plaquettes sont pressées avec la même intensité.

Comme visible sur la figure 2, le pignon 26 est entraîné par un pignon de sortie 33 du réducteur 23, ce pignon de sortie 33 étant rigidement solidaire d'une roue dentée 34 dans laquelle est engrenée un pignon de sortie 36 du moteur 22.

Les pignons 33 et 26 sont des pignons à denture droite de longueur suffisante pour permettre au pignon 26 de se déplacer le long de l'axe AX tout en continuant d'être entraîné en rotation par le moteur 22 via le réducteur 23.

L'ensemble moto-réducteur 23, formant actionneur, et/ou chaque filetage de l'axe mécanique 24 est irréversible pour maintenir les plaquettes basculantes 7 et 8 pressées sur le disque sans alimentation électrique du moteur 22 ou, au contraire, pour les maintenir dans la position écartée du disque en condition de non freinage.

Dans une variante de réalisation, les plaquettes 7 et 8 assurent sur commande les freinages de service, de secours et de parking.

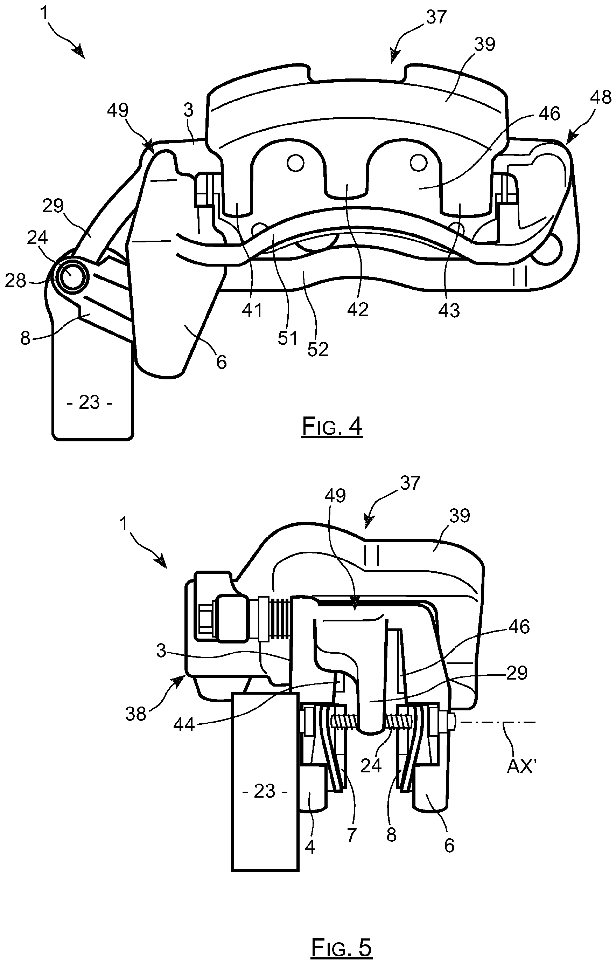

Dans une autre variante avantageuse représentée sur les figures 4 à 6, l'étrier de frein comporte une chape fixe 3 portant d'une part les plaquettes basculantes 7 et 8 ainsi que le motoréducteur électrique 23 et d'autre part un corps d'étrier flottant 37 comportant des actionneurs hydrauliques pour presser un autre jeu de plaquettes coulissant axialement.

Dans cette configuration les plaquettes basculantes 7 et 8 assurent les freinages de secours et de parking, alors que les plaquettes coulissantes pressées par d'étrier flottant 37 à commande hydraulique, assurent le freinage de service.

Le corps d'étrier flottant 37 est connu en soi, il comprend une base 38 dans laquelle sont logés des actionneurs hydrauliques à piston non représentés, cette base étant prolongée par une voûte 39 se terminant par des doigts 41, 42 et 43 situés en vis-à-vis de la base 38.

Comme visible plus clairement sur la figure 5 ce corps d'étrier 37 enserre une plaquette coulissante 44 située en vis-à-vis de sa base 38, et une autre plaquette coulissante 46 située en vis-à-vis de ses doigts 41, 42, 43. Ces plaquettes 44 et 46 sont montées coulissantes dans des gorges correspondantes de la chape fixe 3, en étant situées chacune en vis-à-vis d'une face du disque, et elles sont pressées pou relâchées par l'étrier flottant.

Le corps d'étrier 37 est monté flottant selon la direction axiale AX, de sorte que lorsque les pistons de ses actionneurs hydrauliques pressent la plaquette coulissante 44 contre le disque, il se déplace selon la direction AX pour que la plaquette coulissante opposée, à savoir la plaquette 46, soit elle aussi pressée contre la face opposée du disque.

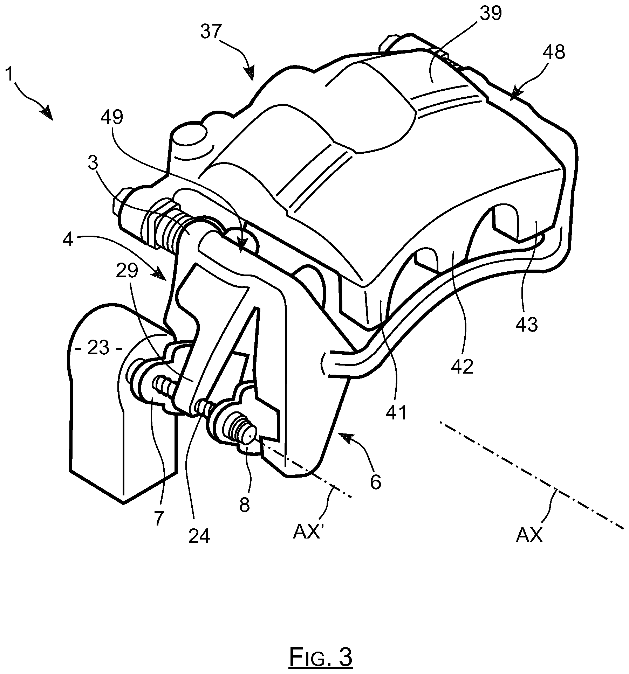

Comme visible sur les figures 2 à 5, la chape fixe 3 a une forme générale correspondant à celle d'une chape fixe usuelle, mais l'une des extrémités intègre les portions latérales 4 et 6 visibles sur la figure 1 permettant de porter les plaquettes basculantes 7 et 8.

Plus particulièrement, cette chape 3 comporte une première base 48 chevauchant le disque de freinage en étant orientée axialement par rapport à celui-ci, et comportant un trou borgne recevant une colonnette de guidage du corps d'étrier flottant 37.

Une seconde base 49 distante de la première selon une direction tangentielle par rapport au disque comporte également un trou borgne recevant une seconde colonnette de guidage du corps d'étrier flottant 37. Ces deux bases 48 et 49 sont reliées l'une à l'autre par deux bras latéraux repérés par 51 et 52 qui s'étendent le long du disque chacun en vis-à-vis de l'une de ses faces.

Comme visible plus clairement sur la figure 5, la seconde base 49 est prolongée par les portions latérales 4 et 6 espacées l'une de l'autre de part et d'autre du disque, et également par le support central 29 qui prolonge la base 49 entre les portions latérales 4 et 6.

Les portions latérales 4 et 6 s'étendent parallèlement l'une à l'autre selon une direction généralement perpendiculaire à un plan passant par les colonnettes du corps flottant 37. Le support central 39 s'étend quant à lui de manière oblique par rapport aux portions latérales 4 et 6, pour longer la tranche du disque de freinage non représenté en ayant une orientation orthoradiale par rapport à l'axe AX.

L'ensemble constitué par la seconde base 49, avec les portions latérales 4 et 6 et le support central 29 prolongeant cette base 49, porte le système de freinage électromécanique à plaquettes basculantes 7 et 8. Plus particulièrement la première plaquette 7 est montée basculante dans la première portion 4, à laquelle est par ailleurs fixé l'ensemble moto-réducteur 23. La seconde plaquette 8 est montée basculante dans la seconde portion latérale 6, et l'axe 24 qui traverse les extrémités libres des plaquettes basculantes 7 et 8 est maintenu par le support central 29 qu'il traverse.
- 1 :: étrier de frein
- 2 :: disque de freinage
- 3 :: chape fixe
- 4 :: première portion latérale
- 6 :: seconde portion latérale
- 7 :: première plaquette basculante
- 8 :: seconde plaquette basculante
- 9 :: base
- 11 :: extrémité libre
- 12 :: support ou sabot
- 13 :: paroi principale
- 14 :: nervures
- 17 :: trou
- 18 :: trou
- 19 :: base
- 21 :: extrémité libre
- 22 :: moteur électrique
- 23 :: motoréducteur électrique
- 24 :: axe mécanique principal
- 26 :: pignon d'extrémité
- 27 :: première butée
- 28 :: seconde butée
- 29 :: support central
- 31 :: ressort de rappel
- 32 :: ressort de rappel
- 33 :: pignon de sortie
- 34 :: roue dentée
- 36 :: pignon de sortie
- 37 :: corps d'étrier flottant
- 38 :: base
- 39 :: voûte
- 41 :: doigt
- 42 :: doigt
- 43 :: doigt
- 44 :: plaquette coulissante
- 46 :: autre plaquette coulissante
- AX :: axe longitudinal
- AX' :: axe longitudinal
- AY1 :: axe
- AY2 :: axe

## Revendications

1. Etrier (1) de frein de véhicule automobile, destiné à chevaucher un bord externe d'un disque de freinage (2), comprenant une première plaquette (7) et une seconde plaquette (8) destinées à être situées de part et d'autre du disque (2), chaque plaquette (7, 8) ayant une base (9, 19) par laquelle elle est montée basculante dans l'étrier et une extrémité libre (11, 21) destinée à dépasser du bord externe du disque (2), un actionneur comprenant un moteur électrique (22), un axe mécanique (24) mobile en translation selon sa propre direction longitudinale (AX') et traversant les extrémités (11, 21) des plaquettes (7, 8), un pignon (26) ainsi qu'une première butée (27) et une seconde butée (28) portés par l'axe mécanique (24), la première et la seconde butée (27, 28) étant accolées respectivement à la première plaquette (7) et à la seconde plaquette (8) pour les enserrer, dans lequel le pignon (26) est rigidement solidaire de l'axe mécanique (24) et l'une des butées (27, 28) est bloquée en rotation et vissée sur cet axe mécanique (24), et dans lequel le moteur électrique (22) entraîne en rotation le pignon (26) par l'intermédiaire d'un réducteur (23) pour rapprocher et écarter l'une de l'autre ces butées selon que le frein (1) est activé ou désactivé.

2. Etrier (1) de frein de véhicule automobile, destiné à chevaucher un bord externe d'un disque de freinage (2), comprenant une première plaquette (7) et une seconde plaquette (8) destinées à être situées de part et d'autre du disque (2), chaque plaquette (7, 8) ayant une base (9, 19) par laquelle elle est montée basculante dans l'étrier et une extrémité libre (11, 21) destinée à dépasser du bord externe du disque (2), un actionneur comprenant un moteur électrique (22), un axe mécanique (24) mobile en translation selon sa propre direction longitudinale (AX') et traversant les extrémités (11, 21) des plaquettes (7, 8), un pignon (26) ainsi qu'une première butée (27) et une seconde butée (28) portés par l'axe mécanique (24), la première et la seconde butée (27, 28) étant accolées respectivement à la première plaquette (7) et à la seconde plaquette (8) pour les enserrer, dans lequel l'axe mécanique (24) est bloqué en rotation et le pignon (26) vissé sur l'axe mécanique (24) en étant contigu à l'une des butées (27, 28) montée coulissante le long de l'axe mécanique (24) pour la pousser, et dans lequel le moteur électrique (22) entraîne en rotation le pignon (26) par l'intermédiaire d'un réducteur (23) pour rapprocher et écarter l'une de l'autre ces butées selon que le frein (1) est activé ou désactivé.

3. Etrier selon la revendication 1, dans lequel l'axe mécanique (24) comporte un premier et un second filetage ayant des sens d'enroulement opposés, la première butée (27) étant vissée sur le premier filetage, la seconde butée (28) étant vissée sur le second filetage, et des moyens de blocage en rotation de chaque butée (27, 28) par rapport aux plaquettes.

4. Etrier selon la revendication 2, dans lequel le pignon est vissé sur l'axe mécanique (24) en étant rigidement solidaire de la butée (27) dont il est contigu pour former avec cette butée (27) un poussoir.

5. Etrier selon la revendication 2, dans lequel l'axe mécanique (24) comporte deux méplats latéraux opposés pour lui donner une section oblongue, et dans lequel l'une au moins des plaquettes basculantes (7, 8) comporte à son extrémité un trou oblong ayant une section complémentaire de la section de l'axe (24) pour bloquer cet axe mécanique en rotation.

6. Etrier selon l'une des revendications précédentes, comprenant au moins un moyen de rappel (31, 32) tendant continuellement à écarter les extrémités (11, 21) de plaquettes (7, 8) l'une de l'autre à l'encontre de l'actionneur.

7. Etrier selon l'une des revendications précédentes, comprenant au moins un ressort de rappel hélicoïdal (31, 32) porté par l'axe mécanique (24) et interposé entre les extrémités (11, 21) des plaquettes (7, 8) pour tendre continuellement à les écarter l'une de l'autre.

8. Etrier selon l'une des revendication précédentes, dans lequel l'axe mécanique (24) est porté par un support central (29) rigidement solidaire d'une partie fixe de l'étrier, et comprenant un premier ressort hélicoïdal (31) porté par l'axe mécanique (24) en étant interposé entre le support central (29) et la première plaquette (7) et un second ressort hélicoïdal (32) porté par l'axe mécanique (24) en étant interposé entre le support central (29) et la seconde plaquette (8), pour tendre continuellement à écarter les plaquettes l'une de l'autre.

9. Etrier selon l'une des revendications précédentes, comprenant une chape fixe (3) portant la première et la seconde plaquette basculante (7, 8) ainsi que le moteur électrique (22), et dans lequel cette chape fixe (3) porte également des plaquettes coulissantes (44, 46) ainsi qu'un corps d'étrier flottant (37) portant un ou des actionneurs hydrauliques pour presser ces plaquettes coulissantes (44, 46).

10. Etrier selon la revendication 9, dans lequel la chape fixe comporte une base (49) recevant une colonnette de guidage du corps d'étrier flottant (37), cette base étant prolongée par deux portions latérales (4, 6) portant respectivement la première et la seconde plaquette basculante (7, 8), et par un support central (29) traversé par l'axe mécanique (24), le moteur électrique (22) étant porté par la première portion latérale (4).

11. Frein de véhicule automobile comprenant un disque de freinage équipé d'un étrier selon l'une des revendications précédentes.

## Patentansprüche

1. Bremssattel (1) für ein Automobilfahrzeug, der dazu ausgelegt ist, einen externen Rand einer Bremsscheibe (2) zu übergreifen, umfassend eine erste Platte (7) und eine zweite Platte (8), die dazu ausgelegt sind, auf beiden Seite der Scheibe (2) angeordnet zu sein, wobei jede Platte (7, 8) eine Basis (9, 19) hat, durch die sie kippbar in dem Sattel montiert ist, und ein freies Ende (11, 21), das dazu ausgelegt ist, über den externen Rand der Scheibe (2) hinaus zu ragen,
**dadurch gekennzeichnet, dass** der Sattel ein Betätigungselement umfasst, umfassend einen Elektromotor (22), eine mechanische Achse (24), die in Translation entlang ihrer eigenen Längsrichtung (AX') bewegbar ist und die Enden (11, 21) der Platten (7, 8) durchsetzt, ein Ritzel (26) sowie einen ersten Anschlag (27) und einen zweiten Anschlag (28), die durch die mechanische Achse (24) getragen werden, wobei der erste und der zweite Anschlag (27, 28) an die erste Platte (7) beziehungsweise an die zweite Platte (8) angebaut sind, um sie einzuspannen, wobei das Ritzel (26) starr mit der mechanischen Achse (24) verbunden ist, und wobei der eine der Anschläge (27, 28) drehblockiert und auf diese mechanische Achse (24) geschraubt ist, und wobei der Elektromotor (22) das Ritzel (26) mittels eines Getriebes (23) zur Drehung antreibt, um den einen dieser Anschläge an den anderen anzunähern und davon zu beabstanden, je nachdem, ob die Bremse (1) aktiviert oder deaktiviert ist.

2. Bremssattel (1) für ein Automobilfahrzeug, der dazu ausgelegt ist, einen externen Rand einer Bremsscheibe (2) zu übergreifen, umfassend eine erste Platte (7) und eine zweite Platte (8), die dazu ausgelegt sind, auf beiden Seite der Scheibe (2) angeordnet zu sein, wobei jede Platte (7, 8) eine Basis (9, 19) hat, durch die sie kippbar in dem Sattel montiert ist, und ein freies Ende (11, 21), das dazu ausgelegt ist, über den externen Rand der Scheibe (2) hinaus zu ragen,
**dadurch gekennzeichnet, dass** der Sattel ein Betätigungselement umfasst, umfassend einen Elektromotor (22), eine mechanische Achse (24), die in Translation entlang ihrer eigenen Längsrichtung (AX') bewegbar ist und die Enden (11, 21) der Platten (7, 8) durchsetzt, ein Ritzel (26) sowie einen ersten Anschlag (27) und einen zweiten Anschlag (28), die durch die mechanische Achse (24) getragen werden, wobei der erste und der zweite Anschlag (27, 28) an die erste Platte (7) beziehungsweise an die zweite Platte (8) angebaut sind, um sie einzuspannen, wobei die mechanische Achse (24) drehblockiert ist und das Ritzel (26) auf die mechanische Achse (24) geschraubt ist und an einem der Anschläge (27, 28) anstößt, der entlang der mechanischen Achse (24) verschiebbar montiert ist, um ihn zu drücken, und wobei der Elektromotor (22) das Ritzel (26) mittels eines Getriebes (23) zur Drehung antreibt, um den einen dieser Anschläge an den anderen anzunähern und davon zu beabstanden, je nachdem, ob die Bremse (1) aktiviert oder deaktiviert ist.

3. Sattel nach Anspruch 1, bei dem die mechanische Achse (24) ein erstes und ein zweites Gewinde umfasst, die zueinander entgegengesetzte Drehrichtungen haben, wobei der erste Anschlag (27) auf das erste Gewinde geschraubt ist, wobei der zweite Anschlag (28) auf das zweite Gewinde geschraubt ist, sowie Mittel zur Drehblockierung jedes Anschlags (27, 28) mit Bezug zu den Platten.

4. Sattel nach Anspruch 2, bei dem das Ritzel auf die mechanische Achse (24) geschraubt ist und starr mit dem Anschlag (27) verbunden ist, an den es anstößt, um zusammen mit diesem Anschlag (27) einen Drücker zu bilden.

5. Sattel nach Anspruch 2, bei dem die mechanische Achse (24) zwei laterale entgegengesetzte Abflachungen umfasst, um ihr einen länglichen Querschnitt zu geben, und bei dem wenigstens eine der kippbaren Platten (7, 8) an ihrem Ende ein Langloch hat, das einen Querschnitt komplementär zum Querschnitt der Achse (24) aufweist zur Drehblockierung dieser mechanischen Achse.

6. Sattel nach einem der vorhergehenden Ansprüche, umfassend wenigstens ein Rückstellmittel (31, 32), das kontinuierlich versucht, die Enden (11, 21) der Platten (7, 8) entgegen dem Betätigungselement voneinander zu beabstanden.

7. Sattel nach einem der vorhergehenden Ansprüche, umfassend wenigstens eine schraubenförmige Rückstellfeder (31, 32), die durch die mechanische Achse (24) getragen wird und zwischen den Enden (11, 21) der Platten (7, 8) eingefügt ist, um kontinuierlich zu versuchen, sie voneinander zu beabstanden.

8. Sattel nach einem der vorhergehenden Ansprüche, bei dem die mechanische Achse (24) durch einen zentralen Träger (29) getragen wird, der starr mit einem festen Teil des Sattels verbunden ist, und eine erste Schraubenfeder (31) umfasst, die durch die mechanische Achse (24) getragen wird und zwischen dem zentralen Träger (29) und der ersten Platte (7) eingefügt ist, und eine zweite Schraubenfeder (32), die durch die mechanische Achse (24) getragen wird und zwischen dem zentralen Träger (29) und der zweiten Platte (8) eingefügt ist, um kontinuierlich zu versuchen, die Platten voneinander zu beabstanden.

9. Sattel nach einem der vorhergehenden Ansprüche, umfassend eine feste Kappe (3), die die erste und die zweite kippbare Platte (7, 8) sowie den Elektromotor (22) trägt, und wobei diese feste Kappe (3) ferner verschiebbare Platten (44, 46) trägt sowie einen schwimmenden Sattelkörper (37), der ein oder mehrere hydraulische Betätigungselemente trägt, um diese verschiebbaren Platten (44, 46) zu drücken.

10. Sattel nach Anspruch 9, bei dem die feste Kappe eine Basis (49) umfasst, die eine Säule zur Führung des schwimmenden Sattelkörpers (37) aufnimmt, wobei diese Basis durch zwei laterale Bereiche (4, 6) verlängert ist, die die erste beziehungsweise die zweite kippbare Platte (7, 8) tragen, sowie durch einen zentralen Träger (29), der durch die mechanische Achse (24) durchsetzt wird, wobei der Elektromotor (22) durch den ersten lateralen Bereich (4) getragen wird.

11. Bremse eines Automobilfahrzeugs, umfassend eine Bremsscheibe, die mit einem Sattel nach einem der vorhergehenden Ansprüche ausgestattet ist.

## Claims

1. A brake caliper (1) for an automobile vehicle, for overlapping an outer edge of a brake disk (2), comprising a first pad (7) and a second pad (8) to be located on either side of the disk (2), each pad (7, 8) having a base (9, 19) through which it is swingably mounted in the caliper and a free end (11, 21) for protruding from the outer edge of the disk (2), **characterised in that** the caliper comprises an actuator comprising an electric motor (22), a mechanical axis (24) translationally movable along its own longitudinal direction (AX') and passing through the ends (11, 21) of the pads (7, 8), a pinion (26) as well as a first stop (27) and a second stop (28) carried by the mechanical axis (24), the first and second stops (27, 28) adjoining the first pad (7) and the second pad (8) respectively to enclose them, wherein the pinion (26) is rigidly integral with the mechanical axis (24) and one of the stops (27, 28) is rotatably locked and screwed on this mechanical axis (24), and wherein the electric motor (22) rotatably drives the pinion (26) through a reducer (23) to move these stops closer to and away from each other based on whether the brake (1) is activated or deactivated.

2. The brake caliper (1) for an automobile vehicle, for overlapping an outer edge of a brake disk (2), comprising a first pad (7) and a second pad (8) to be located on either side of the disk (2), each pad (7, 8) having a base (9, 19) through which it is swingably mounted in the caliper and a free end (11, 21) for protruding from the outer edge of the disk (2), **characterised in that** the caliper comprises an actuator comprising an electric motor (22), a mechanical axis (24) translationally movable along its own longitudinal direction (AX') and passing through the ends (11, 21) of the pads (7, 8), a pinion (26) as well as a first stop (27) and a second stop (28) carried by the mechanical axis (24), the first and the second stops (27, 28) adjoining the first pad (7) and the second pad (8) respectively to enclose them, wherein the mechanical axis (24) is rotatably locked and the pinion (26) screwed on the mechanical axis (24) by adjoining one of the stops (27, 28) slidably mounted along the mechanical axis (24) to push it, and wherein the electric motor (22) rotatably drives the pinion (26) through a reducer (23) to move these stops closer to and away from each other based on whether the brake (1) is activated or deactivated.

3. The caliper according to claim 1, wherein the mechanical axis (24) includes a first and a second thread having opposite winding directions, the first stop (27) being screwed on the first thread, the second stop (28) being screwed on the second thread, and means for rotatably locking each stop (27, 28) with respect to the pads.

4. The caliper according to claim 2, wherein the pinion is screwed on the mechanical axis (24) by being rigidly integral with the stop (27) contiguous thereto to form a pusher with this stop (27).

5. The caliper according to claim 2, wherein the mechanical axis (24) includes two opposite lateral flats to give it an oblong cross-section, and wherein at least one of the tiltable pads (7, 8) includes at its end an oblong hole having a cross-section complementary to the cross-section of the axis (24) to rotatably lock this mechanical axis.

6. The caliper according to one of the previous claims, comprising at least one return means (31, 32) continuously tending to move the ends (11, 21) of pads (7, 8) away from each other against the actuator.

7. The caliper according to one of the previous claims, comprising at least one return coil spring (31, 32) carried by the mechanical axis (24) and interposed between the ends (11, 21) of the pads (7, 8) to continuously tend to move them away from each other.

8. The caliper according to one of the previous claims, wherein the mechanical axis (24) is carried by a centre support (29) rigidly integral with a fixed part of the caliper, and comprising a first coil spring (31) carried by the mechanical axis (24) by being interposed between the centre support (29) and the first pad (7) and a second coil spring (32) carried by the mechanical axis (24) by being interposed between the centre support (29) and the second pad (8), to continuously tend to move the pads away from each other.

9. The caliper according to one of the previous claims, comprising a fixed clevis (3) carrying the first and second tiltable pads (7, 8) as well as the electric motor (22), and wherein this fixed clevis (3) also carries sliding pads (44, 46) as well as a floating caliper body (37) carrying one or more hydraulic actuator(s) to press these sliding pads (44, 46).

10. The caliper according to claim 9, wherein the fixed clevis includes a base (49) receiving a guide pin for the floating caliper body (37), this base extending to two lateral portions (4, 6) carrying the first and the second tiltable pads (7, 8) respectively, and to a centre support (29) through which the mechanical axis (24) passes, the electric motor (22) being carried by the first lateral portion (4).

11. A brake for an automobile vehicle comprising a brake disk fitted with a caliper according to one of the previous claims.
